# EUROPÄISCHE PATENTSCHRIFT

(11) **EP 2 450 243 B1**
(45) Veröffentlichungstag und Bekanntmachung des Hinweises auf die Patenterteilung: **24.04.2019**
(21) Anmeldenummer: 11182597.2
(22) Anmeldetag: 23.09.2011
(51) Int. Cl.: B60S 1/20, B60S 1/16, B60S 1/24, F16C 3/22, F16C 7/02

(54) **Wischergetriebe**
Wiper drive
Engrenage d'essuie-glace

(30) Priorität: 03.11.2010 DE 102010043323
(43) Veröffentlichungstag der Anmeldung: 09.05.2012
(73) Patentinhaber: Robert Bosch GmbH, 70442 Stuttgart (DE)
(72) Erfinder: Lipps, Verena, 77833 Ottersweier (DE)

(56) Entgegenhaltungen:
- CN-Y- 2 642 602
- DE-A1-102008 055 072
- FR-A- 676 438
- KR-A- 20060 092 767
- US-A- 5 848 553

## Beschreibung

### Stand der Technik

Zur Umsetzung der rotierenden Bewegung eines Scheibenwischermotors in eine Schwenkbewegung eines Wischerarms werden in Scheibenwischeranlagen spezielle Getriebe verwendet. Solche Wischergetriebe umfassen eine in einem Gehäuse angeordnete Getriebeanordnung mit mehreren miteinander mechanisch gekoppelten Getriebeelementen. So kann beispielsweise ein rotierendes Stirnrad mittels einer Kurbelplatte mit einem Glockenritzel verbunden werden, welches wiederum mit einem Zahnrad einer Antriebswelle verbunden ist. Eine solche Kurbelplatte ist typischerweise als ein gestanztes Teil mit zwei darin eingepressten Bolzen ausgebildet. Jeder Bolzen wird anschließend mit einer als Anlaufelement dienenden Kunststoffkappe versehen. Diese Anlaufelemente ermöglichen eine bessere Gleitreibung zwischen Kurbelplatte und Gehäuse. Bei der Herstellung einer herkömmlichen Kurbelplatte müssen fünf Einzelteile in einer vorgegebenen Weise miteinander verbunden werden. Dies macht die Herstellung der Kurbelplatte relativ aufwendig.

Es ist daher Aufgabe der Erfindung, den Aufwand bei der Herstellung eines Wischermotors zu reduzieren. Diese Aufgabe wird durch ein Wischergetriebe gemäß Anspruch 1 gelöst. Weitere vorteilhafte Ausführungsformen der Erfindung sind in den untergeordneten Ansprüchen angegeben. FR 676 438 A zeigt den Oberbegriff von Anspruch 1.

### Offenbarung der Erfindung

Gemäß der Erfindung ist ein Wischergetriebe mit einem Gehäuse und einer im Gehäuse angeordneten Getriebeanordnung umfassend ein um eine erste Achse rotierendes Getriebeelement und ein um eine zweite Achse schwenkendes Getriebeelement vorgesehen, wobei die beiden Getriebeelemente über ein Kurbelelement miteinander gekoppelt sind. Das Kurbelelement ist in Form einer Kurbelstange mit zwei rechtwinklig gebogenen Endgereichen ausgebildet. Jeder der beiden Endbereiche greift dabei zapfenförmig in eine exzentrisch angeordnete Öffnung des jeweiligen Getriebeelements ein. Durch die Verwendung einer einstückigen Kurbelstange mit gebogenen Endbereichen entfallen zwei Bauteile, nämlich die separat zu montierenden Bolzen. Hierdurch wird die Herstellung der Kurbel vereinfacht. Dies wiederum erlaubt eine einfachere und kostengünstigere Herstellung des Wischergetriebes. Ferner wird hierdurch die Toleranzkette verkleinert, da das erfindungsgemäße Kurbelelement weniger Schnittstellen aufweist.

In einer Ausführungsform ist vorgesehen, dass an wenigstens einem der beiden Endbereiche ein auf die Kurbelstange aufschiebbares und mittels Presspassung gehaltenes Kunststoffelement angeordnet ist, das eine Anlauffläche für die Kurbelstange bildet. Ein solches Kunststoffelement erlaubt eine einfache und schnelle Montage. Durch die Anlauffläche des Kunststoffelements wird eine bessere Gleitreibung zwischen Kurbelelement und Gehäuse sowie eine bessere Führung der Kurbelstange im Gehäuse erreicht.

In einer weiteren Ausführungsform ist vorgesehen, dass an wenigstens einem der den beiden Endbereiche ein an die Kurbelstange anklemmbares Kunststoffelement angeordnet ist, das eine Anlauffläche für die Kurbelstange bildet. Auch diese Ausführungsform erlaubt eine schnelle und einfache Montage. Durch die Anlauffläche des Kunststoffelements wird eine bessere Gleitreibung zwischen Kurbelelement und Gehäuse sowie eine bessere Führung der Kurbelstange im Gehäuse erreicht.

Schließlich sieht eine Ausführungsform vor, dass das Kunststoffelement mittels Klebstoff in seiner Montageposition gesichert ist. Durch eine derartige Klebeverbindung wird die Befestigung des Kunststoffelements und damit die Haltbarkeit des gesamten Bauteils verbessert.

Im Folgenden wird die Erfindung anhand von Figuren näher dargestellt. Es zeigen:
Fig. 1 ein erfindungsgemäßes Wischergetriebe mit zwei über eine Kurbelstange mechanisch miteinander verbundenen Getriebeelementen;
Fig. 2 eine erfindungsgemäße Kurbelstange mit eine Mittelabschnitt und zwei zum Mittelabschnitt jeweils rechtwinklig gebogenen Endabschnitten;
Fig. 3 drei verschiedene Kunststoffelemente zum Montieren auf die Kurbelstange aus Figur 2;
Fig. 4 eine Detailansicht des Endbereichs der Kurbelstange mit einem montierten Kunststoffelement gemäß eines ersten Ausführungsbeispiels;
Fig. 5 eine Detailansicht des Endbereichs der Kurbelstange mit einem montierten Kunststoffelement gemäß eines zweiten Ausführungsbeispiels; und
Fig. 6 eine Detailansicht des Endbereichs der Kurbelstange mit einem montierten Kunststoffelement gemäß eines dritten Ausführungsbeispiels.

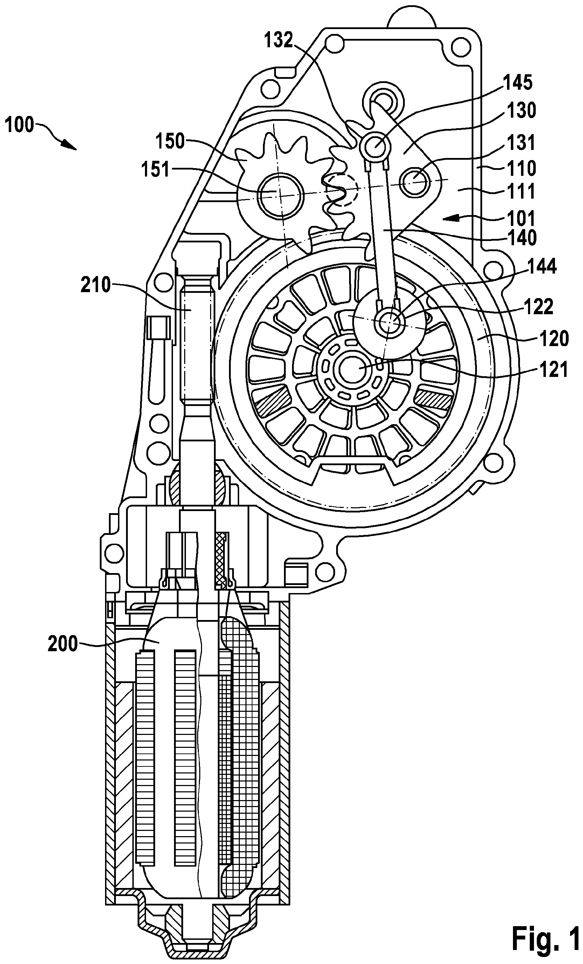

Die Figur 1 zeigt ein Wischergetriebe 100 gemäß der Erfindung. Das Wischergetriebe umfasst dabei ein Gehäuse 110 sowie eine in einer Gehäusekammer angeordnete Getriebeanordnung 101 zum Umsetzen einer Rotationsbewegung eines Wischermotors 200 in eine Schwenkbewegung eines Wischerarms. Der Wischermotor 200 ist im vorliegenden Fall innerhalb des Getriebegehäuses 110 integriert. Die Getriebeanordnung 101 umfasst im Wesentlichen ein als Zahnrad ausgebildetes, um eine erste Achse 121 rotierendes Getriebeelement 120 sowie ein um eine zweite Achse 131 schwenkendes im vorliegenden Beispiel als Glockenritzel ausgebildetes zweites Getriebeelement 130. Das Zahnrad 120 wird von einer Schnecke 210 angetrieben, die auf der Motorwelle montiert ist. Über ein Kurbelelement 140, das in einer exzentrisch angeordneten ersten Kurbelöffnung 122 des Zahnrads 120 sowie in eine ebenfalls exzentrisch angeordnete zweite Kurbelöffnung 132 des Glockenritzels 130 eingreift, wird die Rotationsbewegung des Zahnrads 120 in eine Schwenkbewegung des Glockenritzels 130 umgesetzt. Das Glockenritzel 130 befindet sich wiederum in kämmendem Eingriff mit einem kleinen Zahnrad 150, über das die Schwenkbewegung auf die Antriebswelle des Scheibenwischers übertragen wird. Erfindungsgemäß ist das Kurbelelement 140 in Form einer Kurbelstange mit zwei rechtwinklig gebogenen Endbereichen ausgebildet. Jeder der beiden Endbereiche greift dabei zapfenförmig in die Kurbelöffnung 122, 132 des jeweiligen Getriebeelements 120, 130. Zur Sicherstellung des Anlaufs sowie einer ausreichenden Führung der Kurbelstange sind die beiden Endabschnitte jeweils mit einem Kunststoffelement 144, 145 versehen.

Beide Kunststoffelemente 144, 145 weisen vorzugsweise eine Anlauffläche auf, die in montiertem Zustand des Wischergetriebes an der Innenseite des Getriebedeckels entlang gleitet. Hierdurch wird eine Anlaufunterstützung sowie eine Führung bzw. Abstützung der Kurbelstange an einem das Gehäuse 110 verschließenden Getriebedeckel erreicht. Der Getriebedeckel ist hier nicht gezeigt.

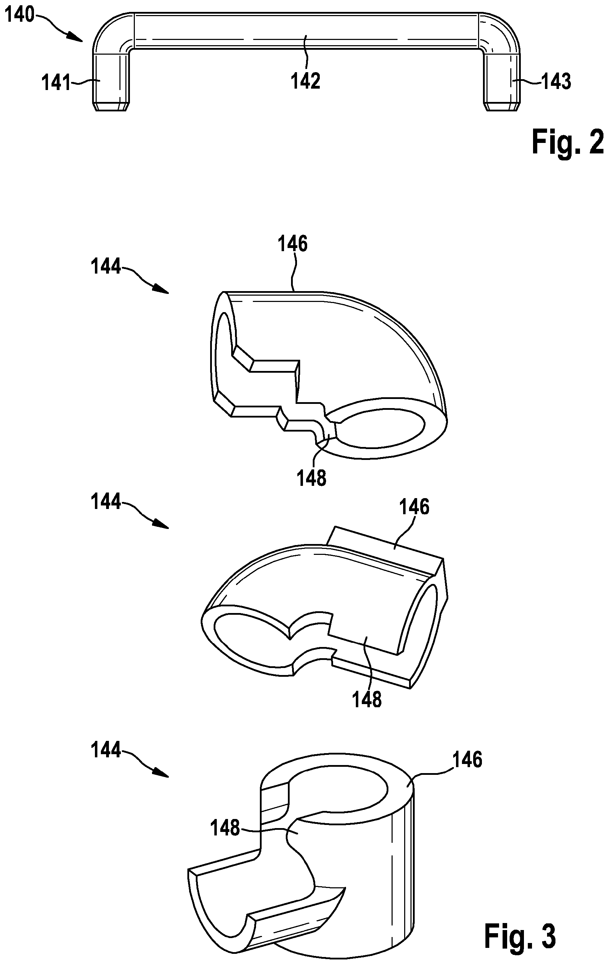

Die Figur 2 zeigt die Kurbelstange aus Figur 1 ohne die montierten Kunststoffelemente. Die Kurbelstange 140 umfasst dabei einen mittleren Abschnitt 142 sowie zwei daran angrenzende, jeweils um 90° gebogene Endabschnitte 141, 143 die beiden Endabschnitte 141, 143 sind dabei parallel zueinander ausgerichtet. Die Kurbelstange kann beispielsweise in einem Biegeprozess aus einem bolzenförmigen Metallstück erzeugt werden. Dies erlaubt eine sehr kostengünstige Herstellung. Vorzugsweise sind die Kanten der Endabschnitte 141, 143 abgefasst, um die Montage der Kurbelstange zu erleichtern.

Zur Herstellung der vollständigen Kurbelelements 140 werden spezielle Kunststoffelemente 144 an den Endabschnitten 141, 143 der Kurbelstange montiert. Solche Kunststoffelemente können beispielsweise als auf die Kurbelstange 140 aufschiebbare und mittels Presspassung gehaltene Elemente oder als an die Kurbelstange klemmbare Elemente ausgebildet sein. Die Figur 3 zeigt beispielhaft drei Ausführungsformen solcher Kunststoffelemente. Dabei ist das linke Kunststoffelement 144 als ein auf die Kurbelstange 140 aufsteckbares Kunststoffteil ausgebildet. Die Befestigung des Kunststoffelements 144 auf der Kugelstange 140 erfolgt mittels entsprechender Klammerstrukturen 148, die die Kurbelstange im Bereich der Biegung umfassen. Auf der den Klammerstrukturen 148 entgegengesetzten Seite des Kunststoffelements 144 ist vorzugsweise eine Anlauffläche 146 ausgebildet.

Das mittlere Kunststoffelement 144 ist ebenfalls als ein auf die Kurbelstange 144 aufsteckbares Bauteil ausgebildet. Die Befestigung bei diesem Kunststoffelement erfolgt vorzugsweise mittels Klammerstrukturen 148, die den mittleren Abschnitt 142 der Kurbelstange umfassen. Im Unterschied zu dem im linken Teil der Figur 3 gezeigten Kunststoffelement weist das mittlere Kunststoffelement eine durch einen auf dem Kunststoffteil aufgesetzten Sockel gebildete Anlauffläche 146 auf. Auf diese Weise wird eine genau definierte Kontaktfläche zum Getriebedeckel erreicht.

Im Unterschied zu den beiden bisher beschriebenen Kunststoffelementen ist das im rechten Bereich der Figur 3 gezeigte Kunststoffelement 144 als ein auf die Kurbelstange aufschiebbares Bauelement ausgebildet. Die Befestigung des Kunststoffelements erfolgt dabei ebenfalls mittels Klammerstrukturen 148, welche die Kurbelstange umfassen. Die durch den speziellen Aufbau des Kunststoffelements 144 ergibt sich eine im Wesentlichen ringförmige Anlauffläche 146.

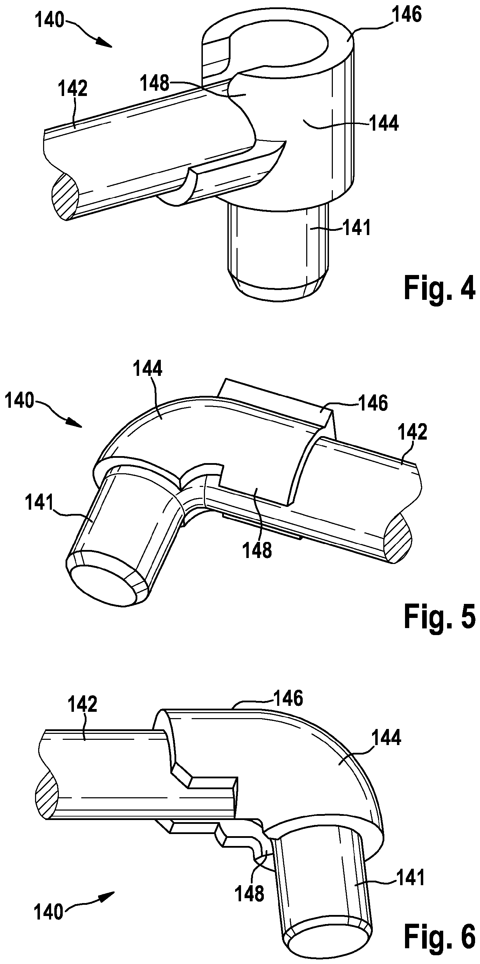

Die Figur 4 zeigt das Kunststoffelement aus dem rechten Bereich der Figur 3 in montiertem Zustand. Hierbei ist ersichtlich, dass das Kunststoffelement 144 durch die spezielle Ausbildung der Klammerstrukturen 148 auf der Kurbelstange 140 gehalten wird. Die definierte Anlauffläche 146 überragt den mittleren Abschnitt 142 der Kurbelstange 140 und bildet somit eine definierte Kontaktfläche zum oberen Getriebedeckel.

Die Figur 5 zeigt das mittlere Kunststoffelement aus Figur 3 in montiertem Zustand. Dabei ist ersichtlich, dass die Befestigung des Kunststoffelements 144 im Wesentlichen durch die Klammerstrukturen 148 erfolgt. Auch in diesem Fall bildet die Anlauffläche 146 eine den mittleren Abschnitt 142 des Bügelelements 140 überragende Kontaktfläche zum oberen Getriebedeckel.

Schließlich zeigt die Figur 6 das im linken Teil der Figur 3 gezeigte Kunststoffelement in montiertem Zustand. Dabei wird ersichtlich, dass die Befestigung des Kunststoffelements 144 im Wesentlichen durch die die Kurbelstange 140 im Bereich der Biegung umfassenden Klammerstrukturen 148 realisiert ist. Der obere Teil des Kunststoffelements 144 überragt den mittleren Abschnitt 142 der Kurbelstange und wird und bildet somit die gewünschte Kontaktfläche 146 zum oberen Getriebedeckel.

Die in den Figuren gezeigten Kunststoffelemente stellen lediglich Ausführungsbeispiele dar. Je nach Anwendung können die Kunststoffelemente mit verschiedenen Geometrien erzeugt werden. Zusätzlich zu der Befestigung durch Aufschieben (Presspassung) oder durch Festklipsen können die Kunststoffelemente mittels Klebstoff auf der Kurbelstange 140 befestigt werden. Dies ermöglicht eine bessere Haltbarkeit.

## Patentansprüche

1. Wischergetriebe (100) mit einem Gehäuse (110) und einer im Gehäuse (110) angeordneten Getriebeanordnung (101) umfassend
- ein um eine erste Achse (121) rotierendes erstes Getriebeelement (120), und
- ein um eine zweite Achse (131) schwenkendes zweites Getriebeelement (130),
wobei die beiden Getriebeelemente (120, 130) über ein Kurbelelement (140) miteinander gekoppelt sind,
**dadurch gekennzeichnet,**
**dass** das Kurbelelement (140) in Form einer Kurbelstange mit zwei rechtwinklig gebogenen Endabschnitten (141, 143) ausgebildet ist, wobei jeder der beiden Endabschnitte (141, 143) zapfenförmig in eine exzentrisch angeordnete Öffnung (122, 132) des jeweiligen Getriebeelements (120, 130) eingreift.

2. Wischergetriebe (100) nach Anspruch 1,
**dadurch gekennzeichnet,**
**dass** an wenigstens einem den beiden Endabschnitte (141, 143) ein auf die Kurbelstange (140) aufschiebbares und mittels Presspassung gehaltenes Kunststoffelement (144, 145) angeordnet ist, welches eine Anlauffläche (146) für die Kurbelstange (140) bildet.

3. Wischergetriebe (100) nach Anspruch 1,
**dadurch gekennzeichnet,**
**dass** an wenigstens einem den beiden Endabschnitte (141, 143) ein an die Kurbelstange (140) anklemmbares Kunststoffelement (144, 145) angeordnet ist, welches eine Anlauffläche (146) für die Kurbelstange (140) bildet.

4. Wischergetriebe (100) nach einem der Ansprüche 2 oder 3,
**dadurch gekennzeichnet,**
**dass** das Kunststoffelement (144, 145) mittels Klebstoff in seiner Montageposition gesichert ist.

## Claims

1. Wiper gearing (100) with a housing (110) and a gearing arrangement (101) arranged in the housing (110), comprising
- a first gearing element (120) rotating about a first axis (121), and
- a second gearing element (130) pivoting about a second axis (131),
wherein the two gearing elements (120, 130) are coupled to each other via a crank element (140), **characterized in that**
the crank element (140) is in the form of a crank rod with two end portions (141, 143) bent at right angles, wherein each of the two end portions (141, 143) engages in the form of a pin in an eccentrically arranged opening (122, 132) of the respective gearing element (120, 130).

2. Wiper gearing (100) according to Claim 1,
**characterized in that**
a plastics element (144, 145) which can be pushed onto the crank rod (140) and held by means of a press fit and which forms a run-on surface (146) for the crank rod (140) is arranged at at least one of the two end portions (141, 143).

3. Wiper gearing (100) according to Claim 1,
**characterized in that**
a plastics element (144, 145) which can be clamped to the crank rod (140) and forms a run-on surface (146) for the crank rod (140) is arranged at at least one of the two end portions (141, 143).

4. Wiper gearing (100) according to either of Claims 2 and 3, **characterized in that** the plastics element (144, 145) is secured in its installation position by means of adhesive.

## Revendications

1. Transmission d'essuie-glace (100) comprenant un carter (110) et un ensemble de transmission (101) disposé dans le carter (110), comportant
- un premier élément de transmission (120) tournant autour d'un premier axe (121) et
- un deuxième élément de transmission (130) pivotant autour d'un deuxième axe (131),
les deux éléments de transmission (120, 130) étant accouplés l'un à l'autre par le biais d'un élément manivelle (140),
**caractérisée en ce que**
l'élément manivelle (140) est réalisé sous la forme d'une bielle dotée de deux parties d'extrémité (141, 143) courbées perpendiculairement, chacune des deux parties d'extrémité (141, 143) venant en prise en forme de tourillon dans une ouverture (122, 132), disposée de manière excentrique, de l'élément de transmission (120, 130) respectif.

2. Transmission d'essuie-glace (100) selon la revendication 1,
**caractérisée en ce**
**qu'**un élément en matière synthétique (144, 145) pouvant être enfilé sur la bielle (140) et retenu par ajustement serré est disposé sur au moins l'une des deux parties d'extrémité (141, 143), lequel élément forme une surface d'appui (146) pour la bielle (140).

3. Transmission d'essuie-glace (100) selon la revendication 1,
**caractérisée en ce**
**qu'**un élément en matière synthétique (144, 145) pouvant être serré contre la bielle (140) est disposé sur au moins l'une des deux parties d'extrémité (141, 143), lequel élément forme une surface d'appui (146) pour la bielle (140).

4. Transmission d'essuie-glace (100) selon la revendication 2 ou 3,
**caractérisée en ce que**
l'élément en matière synthétique (144, 145) est fixé dans sa position de montage au moyen d'un adhésif.
